Europäisches Patentamt

European Patent Office

Office européen des brevets

(19)

(11) Veröffentlichungsnummer: **0 068 043**
**B1**

(12) **EUROPÄISCHE PATENTSCHRIFT**

(45) Veröffentlichungstag der Patentschrift:
02.10.85

(21) Anmeldenummer: 81105861.9

(22) Anmeldetag: 24.07.81

(51) Int. Cl.⁴: **C 08 B  30/02**

(54) **Verfahren zum kontinuierlichen Mahlen und Mischen von stärkehaltigen Rohstoffen.**

(30) Priorität: 30.06.81  DE 3125566

(43) Veröffentlichungstag der Anmeldung:
05.01.83 Patentblatt 83/1

(45) Bekanntmachung des Hinweises auf die Patenterteilung:
02.10.85 Patentblatt 85/40

(84) Benannte Vertragsstaaten:
AT BE CH DE FR GB IT LI LU NL SE

(56) Entgegenhaltungen:
DE - A - 1 922 932
DE - A - 2 918 212
DE - A - 2 944 483

(73) Patentinhaber: Supraton F.J. Zucker GmbH,
Lindenstrasse 43, D-4048 Grevenbroich 1 (DE)

(72) Erfinder: Zucker, Friedrich J., Dipl.-Ing., St.
Andreasstrasse 16, D-4040 Neuss 21 (DE)
Erfinder: Osthaus, Georg, Hardenbergstrasse 23,
D-4040 Neuss 21 (DE)
Erfinder: Fisch, Klaus, Am Altenbach 93,
D-4040 Neuss 21 (DE)

**Beschreibung**

Die Erfindung betrifft ein Verfahren zum kontinuierlichen Mahlen und Mischen von stärkehaltigen Rohstoffen für die Verzuckerung. Die verzuckerte Stärke wird insbesondere zur Herstellung von Alkohol verwendet.

Bekanntlich muß die Stärke aus stärkehaltigen Rohstoffen, insbesondere Getreide und Maiskörnern, dadurch erschlossen werden, daß die Körner ausreichend zerkleinert werden. Es ist daher notwendig und üblich, diese Rohstoffe vorher zu mahlen. Diese Trockenvermahlung von körnigen Stärkerohstoffen zu einem feinen Mehl ist sehr energieaufwendig. So benötigt man beispielsweise zum Schroten von Maiskorn auf einer Hammermühle etwa 10 kWh/t. Um ganzes Korn auf einer Hurikan-Mühle zu feinem Mehl zu vermahlen (kleiner als 60 mesh), benötigt man etwa 60 kWh/t. Auch die Naßvermahlung von ganzen, ungeweichten Körnern oder größeren Bruchstücken ergibt keine Energieersparnis im Vergleich zu Trockenmahlprozessen. Die direkte Verkleisterung von groben Grießen erfordert sehr lange Verflüssigungs- bzw. Verzuckerungszeiten und hat obendrein verringerte Alkoholausbeuten zur Folge.

Die Erfindung hat sich die Aufgabe gestellt, ein Verfahren zum kontinuierlichen Mahlen und Mischen von stärkehaltigen Rohstoffen für die Verzuckerung zu entwickeln, welches weniger energieaufwendig ist, rasch arbeitet und dabei zu hohen Ausbeuten an Zucker bzw. Alkohol führt.

Diese Aufgabe wird überraschenderweise dadurch gelöst, daß man das Material mit heißem Wasser oder heißer Schlempe anmaischt, vorverkleistert und dann im Scherfeld einer Rotor-Stator-Maschine mit ineinandergreifenden Radialflächen vermahlt. Vorzugsweise wird bei diesem Verfahren der Maische von vornherein eine gewisse Menge Enzyme zugegeben, so daß nicht nur eine Vorverkleisterung, sondern auch eine Vorverflüssigung stattfindet.

Überraschenderweise benötigt man für diese erfindungsgemäße Naßvermahlung wesentlich weniger Energie, nämlich nur etwa 7 kWh/t Rohstoff sowie etwa 32 kg Dampf von 95°C. Es hat sich überraschenderweise weiterhin gezeigt, daß man die Energie zur Erzeugung des heißen Wassers doch dadurch vermindern kann, indem man zum Anmaischen heiße Schlempe verwendet. Erstaunlicherweise läßt sich die heiße Naßvermahlung störungsfrei mit heißer Schlempe durchführen, ohne daß es dadurch zu Qualitätsminderungen oder Störungen des Verfahrensablaufes kommt.

Die Naßvermahlung muß erfindungsgemäß im Scherfeld einer Rotor-Stator-Maschine mit ineinandergreifenden Radialflächen durchgeführt werden, da nur hierbei der rasche, vollständige und energiesparende Mahlprozeß durchgeführt werden kann. Rotor-Stator-Maschinen mit ineinandergreifenden Radialflächen sind beispielsweise in der DE-A-2 918 212 beschrieben und

werden von der Anmelderin unter der Bezeichnung »Supraton«® vertrieben.

Die vollständige Verkleisterung und teilweise Verzuckerung erfolgt vorzugsweise in einer zweiten Rotor-Stator-Maschine mit ineinandergreifenden Radialflächen, beispielsweise nach dem Verfahren gemäß DE-A-2 944 483. Durch den Zusatz von weiteren Enzymen erfolgt hierbei oder in einem weiteren Verfahrensschritt die vollständige Verzuckerung.

Sofern ein Ausgangsmaterial verwendet wird mit unterschiedlichem Körnungsgrad, beispielsweise Mais, Maisgrit und Maismehl, so kann dies wegen der verschiedenen Geschwindigkeit der Vorverkleisterung und Vorverflüssigung zu Schwierigkeiten bezüglich der Viskosität führen. In diesen Fällen hat es sich als vorteilhaft erwiesen, das Material vorher zu klassieren und dann in der Weise in das Verfahren einzuführen, daß zunächst die großen Stücke (Maiskörner, Getreidekörner etc.), dann die mittleren (Maisgrit, Grieß, etc.) und erst dann die kleinen Korngrößen (Mehle) zugegeben werden.

Vorzugsweise wird das stärkehaltige Material vor dem Anmaischen vorgewärmt. Die Vorwärmung erfolgt vorzugsweise durch Wärmeaustausch ansonsten ungenutzter Abwärme auf Temperaturen von 60 bis 100°C, vorzugsweise 80 bis 90°C. Auch das heiße Wasser wird mit Temperaturen von 70 bis 100°C, vorzugsweise 90 bis 95°C zugegeben, so daß die Gesamtmischung im Bereich von 80 bis 95°C, vorzugsweise im Bereich von 85 bis 93°C liegt. Bei diesen Temperaturen erfolgt eine rasche Vorverkleisterung und in Gegenwart von Enzymen bereits eine erhebliche Vorverflüssigung. In Abhängigkeit von der Korngröße reichen Zeiten von 0,3 bis 3 Stunden. In der Praxis lassen sich Zeiten von 0,8 bis 2 Stunden gut einhalten und führen zu ausgezeichneten Ergebnissen.

Als Enzyme kommen die üblichen Enzyme für den Aufschluß von Stärke infrage, beispielsweise die $\alpha$-Amylasen, insbesondere die temperaturunempfindliche $\alpha$-Amylase aus Bacillus licheniformis. Außerdem können auch schon Amyloglucosidasen vorhanden sein. In der Praxis kann es ausreichend sein, den Enzymgehalt der heißen Schlempe für die Vorverkleisterung und Vorverflüssigung auszunutzen. Gewünschtenfalls können aber durchaus noch weitere Enzymmengen zugesetzt werden.

In den nachfolgenden Beispielen ist das erfindungsgemäße Verfahren näher erläutert.

**Beispiel 1**

50 t/h ganze Maiskörner werden auf 80°C in einem Wärmeaustauscher vorgewärmt und mit 117 m³/h Schlempe/Enzym mit einer Temperatur von 95°C in einer Mischschnecke angemaischt. Die Mischtemperatur beträgt 90 bis 92°C, das Gemisch wird aus der Schnecke unmittelbar in das Scherfeld einer Rotor-Stator-Maschine mit ineinandergreifenden Radialflächen (Supraton-Maschine) eingeleitet und vermahlen. Der Bedarf an elektrischer Energie für das Aufweichen und Verkleistern beträgt 350 kWh. Weiterhin wird etwa 1 t Dampf von 95°C/h benötigt.

Die austretende Lösung wird unmittelbar in eine zweite Rotor-Stator-Maschine mit ineinandergreifenden Radialflächen eingeleitet und dort gemäß DE-A-2 944 483 vollständig verkleistert.

### Beispiel 2

42,5 t/h Maisgrits und Maismehl werden auf 80°C vorgewärmt und mit 100 m³/h Schlempe/Enzym bei 95°C in einer Mischschnecke angemaischt. Die Mischtemperatur betrug 91°C, die Verweilzeit 0,5 bis 2 Std., vorzugsweise genau 1 Std. Der Verbrauch an elektrischer Energie für Weichen und Verkleisterung betrug 62 kWh. Der Dampfverbrauch von 95°C betrug ungefähr 900 kg/Std. Bei dieser Durchführung wurden die Maisgrits im vorderen Teil der Schnecke und das Maismehl erst am Ende unmittelbar vor der Einführung in die Supraton-Maschine zudosiert. Die weitere Verarbeitung erfolgte wie im Beispiel 1.

### Patentansprüche

1. Verfahren zum kontinuierlichen Mahlen und Mischen von stärkehaltigen Rohstoffen für die Verzuckerung, dadurch gekennzeichnet, daß man das Material mit heißem Wasser oder heißer Schlempe anmaischt, vorverkleistert und dann im Scherfeld einer Rotor-Stator-Maschine mit ineinandergreifenden Radialflächen vermahlt.

2. Verfahren gemäß Anspruch 1, dadurch gekennzeichnet, daß man der Maische von Anfang an Enzyme zufügt und sie dadurch vorverflüssigt.

3. Verfahren gemäß einem der Ansprüche 1 und 2, dadurch gekennzeichnet, daß man Rohstoffe mit stark unterschiedlichem Körnungsgrad klassiert und zunächst die großen und dann die mittleren und schließlich die kleinen Korngrößen in das Verfahren einführt.

### Claims

1. A process for the continuous milling and mixing of starch-containing raw material for saccharification, characterised in that the material is mashed with hot water or hot slop, made into a paste and then milled in the shearing section of a rotor-stator-machine having intermeshing radial surfaces.

2. A process according to claim 1, characterised in that an enzyme is added to the mash at the beginning and is thus liquified.

3. A process according to one of claims 1 and 2, characterised in that raw material with greatly differing grain sizes is classified with, first of all, the large, then the medium and finally the small grain sizes being fed into the process.

### Revendications

1. Procédé pour le broyage et le mélangeage en continu de matières premières amylacées en vue de la saccharification, procédé caractérisé en ce qu'on malaxe la matière avec de l'eau chaude ou du résidu chaud de distillation (vinasse), on la soumet à préempâtage, puis on la broie dans le champ de cisaillement d'une machine à rotor/stator comportant des surfaces radiales imbriquées.

2. Procédé selon la revendication 1, caractérisé en ce qu'on introduit dès le départ des enzymes dans la matière soumise à malaxage et on la préfluidifie ainsi.

3. Procédé selon l'une des revendications 1 et 2, caractérisé en ce qu'on soumet des matières premières présentant un degré très différent de granulométrie à du classement et l'on introduit tout d'abord les gros grains, puis les grains moyens et enfin les grains fins dans le procédé.